Europäisches Patentamt

European Patent Office

Office européen des brevets

(11) Veröffentlichungsnummer: **0 290 716**
**A2**

(12) **EUROPÄISCHE PATENTANMELDUNG**

(21) Anmeldenummer: 88100671.2

(22) Anmeldetag: 19.01.88

(51) Int. Cl.⁴: **A23B 4/12** , **A23B 4/14**

Die Bezeichnung der Erfindung wurde geändert (Richtlinien für die Prüfung im EPA, A-III, 7.3).

(30) Priorität: 21.01.87 DE 3701565

(43) Veröffentlichungstag der Anmeldung:
17.11.88 Patentblatt 88/46

(84) Benannte Vertragsstaaten:
AT BE CH DE ES FR GB GR IT LI LU NL SE

(71) Anmelder: HOECHST AKTIENGESELLSCHAFT
Postfach 80 03 20
D-6230 Frankfurt am Main 80(DE)

(72) Erfinder: Lotz, Andreas, Dr.
Coventrystrasse 6
D-6230 Frankfurt am Main 80(DE)
Erfinder: Wöhner, Gerhard, Dr.
Flörsheimer Strasse 27
D-6093 Flörsheim am Main(DE)
Erfinder: Klug, Christian
Friedrich-Ebert-Strasse 15
D-6231 Schwalbach am Taunus(DE)
Erfinder: Lück, Erich, Dr.
Robert-Stolz-Strasse 102
D-6232 Bad Soden am Taunus(DE)
Erfinder: von Rymon Lipinski, Gert-Wolfhard,
Dr.
Hunsrückstrasse 40
D-6230 Frankfurt am Main 80(DE)

(54) Verfahren zur Konservierung von Geflügel- und Frischfleischprodukten mit Hilfe eines bakterienlysierenden Enzymprodukts aus Streptomyceten.

(57) Bakterienlysierendes Enzymprodukt aus Strepto-myces kann Geflügel-und Frischfleischwaren konser-vieren. Es bewirkt eine Reduktion der Keimzahl, in-dem es nicht nur auf grampositive Keime, sondern auch auf gramnegative Bakterien, wie z.B. Entero-bacteriaceae, wirkt.

EP 0 290 716 A2

## Verwendung von bakterienlysierendem Enzymprodukt aus Streptomyceten zur Haltbarmachung von Frischfleisch

Die Gewinnung eines bakterienlysierenden Enzymprodukts aus Streptomyceten ist bekannt und beispielsweise in den Deutschen Offenlegungsschriften 20 11 935, 20 40 44, 21 46 597 und 34 40 735 beschrieben.

Rohe Fleischerzeugnisse, wie z. B. Hackfleisch, Geflügel, Bratwurstbrät oder rohe Innereien stellen mikrobiologisch stark gefährdete Produkte dar, insbesondere bei unzureichender Kühllagerung. Diese Produkte gelangen roh in den Handel und werden auch teilweise roh verzehrt bzw. weiterverarbeitet.

Untersuchungen haben gezeigt, daß derartige Fleischwaren vorwiegend von Bakterien der Gattungen Pseudomonas, Lactobacillus, Bacillus sowie von Enterobakterien befallen sind. Die mesophile Gesamtkeimzahl liegt im Bereich von $10^4$ bis $10^8$ CFU/g. Auch bei Kühllagerung steigen die Keimzahlen stark innerhalb kurzer Zeit an. Es ist daher wünschenswert in solchen rohen Produkten, die Kontamination so niedrig wie möglich zu halten, um insbesondere auch bei der Weiterverarbeitung derartiger Produkte Wurstwaren mit niedrigen Keimzahlen zu erhalten.

Bislang wurde eine Konservierung von rohen Geflügel-und Fleischerzeugnissen durch Kühllagerung oder Besprühen mit Genußsäure-haltigen Sprays erreicht. Dadurch kann jedoch der pH-Wert der Produkte so stark erniedrigt werden, daß eine anschließende Weiterverarbeitung der Geflügel-bzw. Fleischprodukte schwierig wird. Eine ausreichende Kühlkette ist häufig nicht vorhanden.

Es wurde nun überraschend gefunden, daß bakterienlysierendes Enzymprodukt aus Streptomyceten eine Reduktion der Gesamtkeimzahl in Geflügel-und Frischfleischwaren bewirkt. Das Produkt wirkt nicht nur auf grampositive Keime, sondern auch auf gramnegative Bakterien, wie z.B. Enterobacteriaceae Eine Hemmwirkung, insbesondere gegen Salmonellen, ist erstrebenswert.

Die Erfindung betrifft somit ein Verfahren zur Konservierung von Geflügel-und Frischfleischprodukten, das dadurch gekennzeichnet ist, daß den genannten Fleischprodukten bakterienlysierendes Enzymprodukt aus Streptomyceten zugesetzt wird.

Im folgenden wird die Erfindung im einzelnen, insbesondere in den bevorzugten Ausführungsformen, erläutert. Ferner wird die Erfindung in den Patentansprüchen definiert.

Es kann grundsätzlich jedes lysozymartiges Produkt aus Streptomyceten erfindungsgemäß Anwendung finden. In einfach zusammengesetzten Kulturmedien ist mit Hilfe von Streptomyceten bei einer Fermentationszeit von 1 bis 7 Tagen eine hohe Ausbeute an bakterienlysierendem Enzymprodukt erzielbar. Vorzugsweise wird jedoch das gemäß der Deutschen Offenlegungsschrift 34 40 735 aus Streptomyces coelicolor DSM 3030 sowie aus dessen Varianten und Mutanten gewonnene bakterienlysierende Enzymprodukt eingesetzt.

Besonders bewährt hat sich im Falle der Anzucht von Streptomyces coelicolor DSM 3030 ein Zusatz von Zuckerrübenmelasse in einer Menge von 5 bis 50g, vorzugsweise 10 bis 20 g, pro Liter Kulturmedium. Eine weitere Ausbeutesteigerung wird erreicht, wenn man dem Kulturmedium Calciumionen in Form leicht löslicher, ungiftiger Calciumsalze zusetzt, vorzugsweise in Form des preiswerten Calciumchlorids. Vorteilhaft ist eine 0,05 bis 1 molare Calciumionenkonzentration, besonders bevorzugt sind Konzentrationen von 100 bis 500 mmol, beispielsweise in Form eines Zusatzes von 0,2 bis 0,5 Gew.-% an Calciumchlorid-Dihydrat.

Es können im wesentlichen alle rohen Fleischwaren, wie beispielsweise größere Fleischstücke, gewürfeltes Fleisch aber auch Hackfleisch und Hackfleischerzeugnisse, Geflügel, Bratwürste und Brühwursthalbfabrikate erfindungsgemäß mit dem bakterienlysierenden Enzymprodukt konserviert werden.

Je nach Fleischprodukt kann das bakterienlysierende Enzymprodukt unterschiedlich appliziert werden. Dies kann beispielsweise durch Einspritzen eines Enzym-Konzentrats ($10^5$-$10^6$ U/ml) in einzelne Fleischstücke erfolgen. Hierzu wird Fleisch, wie in der Fleischverarbeitung üblich, zerlegt, sortiert und in kleinere Stücke gewürfelt. In diese einzelnen Fleischwürfel (Kantenlänge einige Zentimeter) wird die Wirkstofflösung mit einer Injektionsnadel möglichst gleichmäßig eingespritzt. Sollen einzelne größere Fleischstücke konserviert werden, wie beispielsweise Knochenschinken, so kann die Wirkstofflösung auch durch Aderspritzen, wie bei der Behandlung mit Lösungen von Nitritpökelsalz üblich, appliziert werden. Falls eine Zerkleinerung des Fleischstückes, z. B. durch Wolfen, notwendig ist, kann dieses anschließend an die oben beschriebene Behandlung erfolgen.

Ferner kann das bakterienlysierende Enzymprodukt auch nach der Vor-Zerkleinerung der rohen Fleischprodukte untergemischt werden. Nach Zugabe des Enzymkonzentrats wird das gewürfelte Fleisch gründlich durchmischt. Hierbei sollte chargenweise vorgegangen werden, um eine gleichmäßige Durchmischung zu gewährleisten.

Eine weitere Applikationsmöglichkeit ist das Aufsprühen wäßriger Lösungen des bakterienlysierenden Enzymprodukts. Die Wirkstofflösung kann hierbei bereits größeren hängenden Fleischstücken gleichmäßig aufgesprüht werden. Es ist hierbei sinnvoll das Präparat in möglichst hoher Dosierung ($10^5$-$10^6$ U/ml) in wäßriger Lösung zu verwenden, dadurch läßt sich eine zu starke Befeuchtung der Oberfläche verhindern und der Wirkstoff kann in das Fleisch einziehen.

Als letzte der beispielhaft aufgeführten Applikationsmöglichkeiten soll hier auch das Eintauchen einzelner Fleischpartikel in die Wirkstofflösung erwähnt werden. Hierzu sollten beispielsweise 3 bis 10 %ige, bevorzugt 5 %ige, Wirkstofflösungen hergestellt werden und das Fleisch kurz für einige Sekunden eingetaucht werden.

Das Enzym läßt sich ebenfalls gemeinsam mit Genußsäuren, z.B. Milchsäure, Essigsäure, Weinsäure und Zitronensäure, dem Fleisch applizieren.

Gleichgültig welche Applikationsmethode man wählt, die im oder am Fleisch verbleibende Menge des Enzymsprodukts soll 10 bis 200 U/mg Fleisch, vorzugsweise 50 bis 100 U/mg Fleisch, betragen.

Es können zwar auch höhere Konzentrationen verwendet werden, da sich ein Überschuß bakterienlysierenden Enzymprodukts nicht negativ bemerkbar macht. Aus wirtschaftlichen Gründen ist dies jedoch nicht sinnvoll.

Die anschließende Überprüfung der Wirkung des bakterienlysierenden Enzymprodukts erfolgt nach an sich bekannten Methoden durch Probenahme nach 1 bis 2 Tagen und Keimzahlbestimmung auf Selektivnährböden zur Erfassung der aeroben Gesamtkeimzahl von Enterobakterien, Staphylokokken und Bacillus.

Unter den erfindungsgemäßen Bedingungen kann man in rohen Fleischwaren mit einer Ausgangskontamination von $10^5$ bis $10^6$ Keimen/g, bei Behandlung mit bakterienlysierendem Enzymprodukt innerhalb von 24 Stunden bei einer Lagertemperatur von 6 bis 10°C eine Keimzahlreduktion von 90 % feststellen.

Bei einer Lagerung von 48 bis 72 Stunden treten zwischen behandelten und nicht-behandelten Proben Unterschiede in Keimzahlen von 2 Zehnerpotenzen auf. Während Keimzahlen in unbehandelten Proben stark ansteigen, und zwar in 48 Stunden auf ca. $10^8$ CFU/g, erfolgt der Anstieg der Keimzahlen in behandelten Proben wesentlich langsamer.

In den folgenden Beispielen wird die Erfindung weitergehend erläutert. Prozentangaben beziehen sich auf das Gewicht, wenn nicht anders angegeben.

Beispiele

1. 10 ml einer Sporensuspension von Streptomyces coelicolor DSM 3030 wurden als Impfmaterial für eine Fermentation mit 5 l Kulturmedium in einem 8 l Fermenter verwendet,

Fermentationsbedingungen

Kulturmedium:
   1 % Glucose
   2 % Melasse
   0,5 % Sojamehl
   0,5 % Caseinpepton
   0,2 % $CaCl_2$ x $2H_2O$
pH-Wert:      6,3
Temperatur:      33°C
Rührerdrehzahl:      300 Upm
Luftzufuhr: 3 l/min
Nach 4 Tagen Fermentationsdauer war die Saccharosekonzentration (aus der Melasse) auf etwa Null abgesunken. Die Zellen wurden durch Zentrifugation abgetrennt und aus dem Kulturüberstand das bakterienlysierende Enzymprodukt durch Alkoholfällung, Ionenaustauscherchromatographie, Ultrafiltration und Gelfiltration isoliert.

Aktivitätsbestimmung von bakterienlysierendem Enzymprodukt:

Zu 2,8 ml einer Suspension von 0,2 mg Micrococcus luteus ATCC 4698 (Boehringer Mannheim) pro ml 0,1 molarem Natriumacetatpuffer (pH 5,0) werden 0,2 ml bakterienlysierendes Enzymprodukthaltige Proben pipettiert und bei 25°C die Abnahme der Trübung durch Messung der Extinktion bei 450 nm bestimmt. Als 1 U wird die Extinktionsabnahme von 0,001 Photometer-Skalaeinheiten pro Minute definiert.

2. Je 1000 g grob entfettetes Schweinefleisch und grob entsehntes Rindfleisch werden in große Würfel mit einer Kantenlänge von 5 cm geschnitten. 200 ml des bakterienlysierenden Enzymkonzentrats ($10^6$ U/ml) werden mit Hilfe einer Injektionsnadel in die Fleischstücke gespritzt, die anschließend im Fleischwolf zerkleinert werden. Das Hackfleisch wird bei 5 bis 10°C gelagert. Nach 24 und 48 Stunden werden 5 g Probe für eine Keimzahlbestimmung entnommen. Nach einer Vorverdünnung der Probe mit sterilem Wasser im Verhältnis 1:10 wird homogenisiert und nach dem Ansetzen einer Verdünnungsreihe auf Lebensmittelkeimzahlager und Selektivnährböden ausplattiert.

Es wird 1 bis 2 Tage bei 30 bzw. 37°C bebrütet.

Bei 24 Stunden gelagertem Fleisch mit einer Ausganskontamination von $7 \times 10^5$ CFU/g wird in behandelten Proben eine Keimzahl von $2 \times 10^5$ festgestellt, während unbehandelte Proben $6 \times 10^6$ Keime aufweisen. Nach einer Lagerung von 48 Stunden zeigen behandelte Proben eine Keimzahl von $2 \times 10^6$ und unbehandelte Proben eine Keimzahl von $2 \times 10^8$.

3. Fleischstücke von grob entfettetem Schweinefleisch und grob entsehntem Rindfleisch werden 1 Minute in eine wäßrige 5 %ige Lösung von bakterienlysierendem Enzymprodukt getaucht. Danach werden die getauchten Fleischstücke bei 5°C gelagert.

Zur Keimzahlbestimmung gemäß Beispiel 2 werden 5 g Fleisch von der Oberfläche entnommen. Bei einer Ausgangskontomination von $5 \times 10^6$ Keimen (aerobe Gesamtkeimzahl)/g besitzt nicht behandeltes Fleisch nach 24 Stunden eine Oberflächenkontamination von $9 \times 10^6$ Keimen/g, während die behandelten Fleischstücke mit $9 \times 10^4$ bis $5 \times 10^5$ Keimen/g kontaminiert sind.

4. Hängende Fleischstücke von 5 kg Gewicht werden mit 500 ml bakterienlysierendem Enzymkonzentrat ($10^4$ U/ml) mit Hilfe eines Zerstäubers besprüht. Die Keimzahlbestimmung nach einer Lagerungszeit bei 5°C wird gemäß Beispiel 2 durchgeführt. Auch hierbei zeigen sich Unterschiede in der aeroben Oberflächen-Gesamtkeimzahl zwischen behandelter und unbehandelter Probe in oben aufgeführten Größenordnungen (Faktor 10 bis 100). Die Oberflächenkontamination wurde nach dem Abklatschverfahren ermittelt bei einer Ausgangskontamination von $3 \times 10^6$ Keimen/cm².

## Ansprüche

1. Verfahren zur Konservierung von Geflügel- und Frischfleischprodukten dadurch gekennzeichnet, daß den Geflügel-und/oder Frischfleischprodukten bakterienlysierendes Enzymprodukt aus Streptomyceten zugesetzt wird.

2. Verfahren nach Anspruch 1, dadurch gekennzeichnet, daß bakterienlysierendes Enzymprodukt aus Streptomyces coelicolor DSM 3030, seinen Varianten und Mutanten eingesetzt wird.

3. Verfahren nach Anspruch 1 oder 2, dadurch gekennzeichnet, daß 10 bis 200 U bakterienlysierendes Enzymprodukt pro mg Fleisch eingesetzt werden.

4. Verfahren nach Anspruch 3, dadurch gekennzeichnet, daß 50 bis 100 U/mg eingesetzt werden.

5. Verfahren nach einem oder mehreren der Ansprüche 1 bis 4, dadurch gekennzeichnet, daß das bakterienlysierende Enzymprodukt zusammen mit Genußsäuren eingesetzt wird.